# EUROPÄISCHE PATENTSCHRIFT

(11) **EP 2 167 298 B1**
(45) Veröffentlichungstag und Bekanntmachung des Hinweises auf die Patenterteilung: **11.05.2011**
(21) Anmeldenummer: 08760411.2
(22) Anmeldetag: 03.06.2008
(51) Int. Cl.: B29C 33/30, B29C 45/04

(54) **FORMTRÄGER FÜR EINE WERKZEUGFORM**
MOLD CARRIER FOR A TOOL MOLD
SUPPORT DE MOULE POUR MOULE D'OUTILLAGE

(30) Priorität: 16.06.2007 DE 102007027789
(43) Veröffentlichungstag der Anmeldung: 31.03.2010
(73) Patentinhaber: KraussMaffei Technologies GmbH, 80997 München (DE); Frehsdorf, Wolfgang, 80802 München (DE)
(72) Erfinder: HOLZNER, Manfred, 82194 Gröbenzell (DE); POHL, Ralf, 82299 Türkenfeld (DE); LUDWIG, Olaf, 85232 Bergkirchen (DE)
(74) Vertreter: Wilhelm, Ludwig
(86) Internationale Anmeldenummer: PCT/EP2008/056827
(87) Internationale Veröffentlichungsnummer: WO 2008/155216

(56) Entgegenhaltungen:
- JP-A- 8 156 058
- JP-A- 2004 291 258
- US-A- 3 650 411

## Beschreibung

Die vorliegende Erfindung betrifft einen Formträger für eine Werkzeugform gemäß dem Oberbegriff des Patentanspruchs 1.

Für große Werkzeugformen, insbesondere bei der Herstellung von großflächigen Polyurethanteilen aber auch anderen Kunststoffteilen, werden oftmals Vertikalformträger eingesetzt, die zwei Formträgerplatten aufweisen, die in Vertikalrichtung relativ zueinander bewegt werden können. An den Formträgerplatten können Werkzeugformhälften angeordnet sein, die beim Schließen einen Kavitätsraum bilden, in dem das Kunststoffprodukt hergestellt wird. Teilweise können Formwerkzeuge auch integral mit den Fomiträgerplatten als Formwerkzeugteile ausgebildet sein.

Bei solchen vertikal bewegbaren Formträgern ist üblicherweise eine Abstützeinrichtung vorgesehen, welche die obere Formträgerplatte hält. Die untere Formträgerplatte ist gegenüber dem Boden abgestützt, eventuell unter Zwischenschaltung einer bestimmten Struktur. Beispielsweise können Führungsschienen angeordnet sein, mit denen die Formträgerplatte - evtl. auf einem Fahrwagen mit Laufrollen - aus dem Bereich der Abstützeinrichtung heraus oder in diesen hinein verfahren werden können.

Besonders bei großbauenden Werkzeugformen oder Formträgern stellt die Zugänglichkeit zu den Werkzeugformen oder den Werkzeugformhälften ein Problem dar. Soll beispielsweise ein Bediener die obere Werkzeugform inspizieren oder reinigen, so muss der meist in den Betriebsbereich hineinreichen, sich hineinbeugen oder vielleicht sogar hineingehen. Dadurch gelangt er aber auch in den Gefahrenbereich, bei einem unbeabsichtigten Betrieb des Formträgers. Überdies muss er in einem solchen Fall in einer ergonomisch sehr ungünstigen Stellung arbeiten, entweder über Kopf oder schräg nach oben.

In der DE 36 20 371 ist ein Formwerkzeug beschrieben, bei dem das Werkzeugoberteil und das Werkzeugunterteil an Werkzeugträgern befestigt sind. Dabei ist wenigstens ein Werkzeugträger gegenüber einem anderen Werkzeugträger relativ bewegbar ausgebildet In einer Ausführungsform ist der obere Werkzeugträger überdies verschwenkbar vorgesehen.

Aus der DD 298 073 ist eine Werkzeugwechselvorrichtung für Kunststoffmaschinen bekannt. Ein Werkzeug ist an einem Spannrahmen befestigt, an dem eine Hebeeinrichtung angreift. Mittels einer Verfahreinrichtung kann das mit dem Spannrahmen versehene Werkzeug transportiert werden. Mit dieser Erfindung wird eine Vorrichtung zum schnellen Werkzeugwechsel geschaffen.

Die DE 2 051 525 beschreibt eine Einrichtung zum Herstellen von Schaumformteilen mit einem Formunterteil und einem Formoberteil. Jeder Formteil ist ein Formträgerrahmen zugeordnet, wobei die Deckplatte verschwenkbar gelagert ist. Durch die Anordnung eines entsprechenden Schienen-/Rollensystems können die Formteile relativ zueinander bewegt werden. Überdies ist das Schienensystem so ausgebildet, dass die Deckplatte einseitig im Sinn einer Schwenkung anhebbar ist.

In der DE 2 002 308 ist eine Vorrichtung zum Verschäumen von Kunststoffen vorgesehen, bei der ein unterer Tisch und ein parallel zu diesem durch mehrere druckmittelbetätigte Kolben-Zylinder-Anordnungen beweglicher oberer Tisch vorgesehen ist, wobei gemäß einer Ausführungsform die Vorrichtung um eine waagerechte Achse schwenkbar ist

Sowohl die JP 2004291258, wie auch die JP 08156058 sowie die US 3,650,411 beschreiben Vertikalschließeinheiten mit einer unteren und einer oberen Formaufspannplatte auf denen Werkzeuge montiert sind. In allen drei Fällen ist die obere Formaufspannplatte inklusive des daran befestigten Werkzeugs lösbar gehalten, wobei im Bedarfsfall die Formaufspannplatte zusammen mit dem Werkzeug um eine Achse verschwenkt werden kann. Mit dieser Maßnahme kann die Zugänglichkeit zum oberen Formwerkzeug insbesondere für Wartungs- und Reinigungsarbeiten verbessert werden Aufgabe der vorliegenden Erfindung ist es, einen Formträger anzugeben, bei dem die Werkzeugformen bzw. das auf einem Formträger montierte Formwerkzeug in der Service- oder Wartungsposition leicht und ergonomisch optimal sowie sicher zugänglich. ist und es beim Schließkraftaufbau zu keiner Belastung der tragenden Unterstützung, insbesondere des Bodens, kommt.

Diese Aufgabe wird durch die im Anspruch 1 angegebenen Merkmale gelöst.

Gemäß einem Kerngedanken der vorliegenden Erfindung ist bei einem eingangs genannten Formträger die obere Formträgerplatte so ausgestaltet, dass sie zwischen einer Arbeitsposition, in der sie zum Schließen des Formträgers auf die untere Formträgerplatte zu verfahrbar ist, und einer Position, in der sie für einen Bediener zugänglich ist, verschwenkbar ausgebildet ist.

Durch die verschwenkbare Ausbildung kann die Formträgerplatte beispielsweise um einen 90°-Winkel nach außen verschwenkt und - falls notwendig - noch zusätzlich vertikal verfahren, beispielsweise abgesenkt, werden. In diesem Zustand ist die Formträgerplatte bzw. das darauf montierte Werkzeug gut erreichbar und zwar in einer aufrechten Stellung eines Bedieners. Der freie Zugang zum Werkzeug wird auch nicht durch etwaige. Verriegelungslaschen oder sonstige Konstruktionselemente behindert. Damit ist eine gute Reinigung, beispielsweise der oberen Werkzeughälfte, möglich, ohne dass ein Podest oder eine Grube erforderlich ist. Auch wird der Bediener keiner Gefährdung mehr ausgesetzt, wenn er in dieser Position Arbeiten am Formwerkzeug durchführt.

Erfindungsgemäß sind Zugelemente vorgesehen, die zwischen der Abstützeinrichtung, einem Querhaupt oder der oberen Formträgerplatte einerseits und der unteren Formträgerplatte andererseits zwischengeschaltet sind. Dadurch wird bei der Schließkraftaufbringung die Kraft in einem im wesentlichen geschlossenen Kraftkreislauf zwischen Formträgerplatten, Querhaupt, Abstützeinrichtung bzw. Zugelemente gehalten, so dass die Schließkraft nicht auf den Boden, etwaige Schienen oder Fahrwägen wirkt.

Um die untere Formträgerplatte aus dem Bereich der Abstützeinrichtung heraus verfahren zu können, ist erfindungsgemäß eine Kopplungsmöglichkeit über Kopplungselemente zwischen den jeweiligen Zugelementen und der unteren Formträgerplatte vorzusehen.

Damit ist die Möglichkeit geschaffen, die untere Formträgerplatte aus dem Bereich der Abstützeinreichung herausverfahrbar sowie in diesen Bereich hineinverfahrbar. Dies kann durch mittels auf Führungsschienen rollende Laufrollen eines Fahrwagens realisiert werden. In diesem Fall kann ein großes, hergestelltes Produkt, welches sich nach dem Öffnen des Formträgers auf dem unteren Formträgerplatte befindet, leicht aus dem Formträger heraustransportiert und dann von der unteren Formträgerplatte entnommen werden. Überdies entfernt man auf diese Art die untere Formträgerplatte aus dem Verschwenkbereich der oberen Formträgerplatte, so dass es zu keiner Kollisionsgefahr zwischen diesen beiden Elementen des Formträgers kommt.

Gemäß einer besonders bevorzugten Ausführungsform ist die obere Formträgerplatte zweiteilig ausgebildet, wobei ein oberer Teil an der Abstützeinrichtung abgestützt ist und der untere Teil gegenüber dem oberen Teil verschwenkbar ausgebildet ist. Bei einer solchen Sandwichplatte kann der obere Teil beispielsweise vertikal verfahrbar beaufschlagt werden, während mit dem unteren Teil in konstruktiv einfacher Weise die Verschwenkbarkeit realisiert wird. Diese Verschwenkbarkeit kann über ein Gelenk, insbesondere über ein im Außenbereich der oberen Formträgerplatte angeordnetes Gelenk realisiert werden. In diesem Gelenk kann beispielsweise auch der Schwenkantrieb integriert sein. Der Schwenkantrieb kann alternativ jedoch auch außerhalb des Gelenks, beispielsweise hydraulisch über einen Hydraulikkolben, realisiert werden.

Gemäß einer weiteren besonders bevorzugten Ausführungsform ist insbesondere die obere Formträgerplatte vertikal verfahrbar, wozu eine Antriebsvorrichtung vorgesehen ist, die vorzugsweise hydraulisch oder elektrisch/mechanisch ausgebildet wird.

Die Verschwenkung kann sich insbesondere in einem Bereich von 90° halten. Bei einer im Schließzustand horizontal ausgerichteten oberen Formträgerplatte würde nach der Verschwenkbewegung diese oder Teile davon vertikal ausgerichtet sein, so dass ein Werkzeugbediener ohne weiteres in ergonomisch optimaler Weise Arbeiten an dem daran befestigten oder damit integrierten Formwerkzeug ausführen kann.

Die vorliegende Erfindung wird nachfolgend mit Bezug auf die beiliegenden Zeichnungen anhand einer Ausführungsform näher erläutert. Die Zeichnungen zeigen in
- Figur 1: eine Schemadarstellung einer Ausführungsform eines erfindungsgemäßen Formträgers in einer ersten Arbeitsposition,
- Figur 2: eine Schemadarstellung der Ausführungsform in Figur 1. in einer zweiten arbeitsposition (Schließdruck aufbauend),
- Figur 3: eine Schemadarstellung wie Figur 1,
- Figur 4: eine Schemadarstellung der Ausführungsform aus Figur 1, jedoch mit heraus verfahrener unteren Formträgerplatte,
- Figur 5: eine Schemadarstellung der Ausführungsform aus Figur 1 mit ver- schwenkter oberer Formträgerplatte und
- Figur 6: eine Schemadarstellung der Ausführungsform aus Figur 1, bei der die verschwenkte obere Formträgerplatte noch abgesenkt ist.

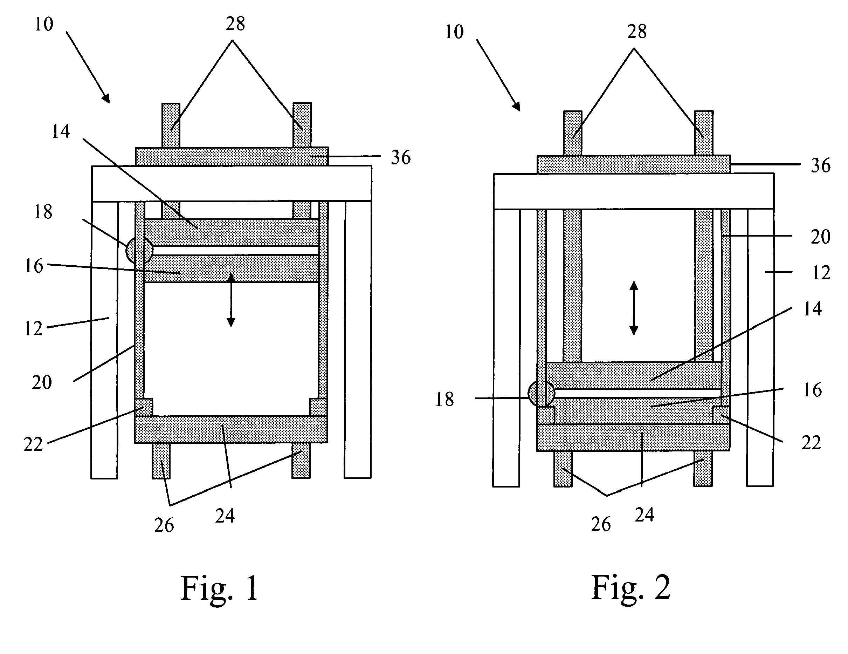

In den Figuren 1 bis 6 ist ein Formträger dargestellt, bei dem ein Traggestell 12 auf dem Boden abgestützt ist. Das Traggestellt 12 umfasst vier vertikale Stützen, die in den Ecken eines (virtuellen) Quaders auf dem Boden stehen. An den oberen Stirnseiten der Stützen ist ein umlaufender Halterahmen angeordnet, an dem - wie nachfolgend noch erläutert wird - verschiedene Elemente des Formträgers befestigt sind. Die Konstruktion ist insbesondere bei großen Formträgern übermannshoch, beispielsweise zwei bis vier Meter.

Am oberen Rahmen des Traggestells 12 ist eine Konstruktion vorgesehen, in der vier Hydraulikzylinder 28, von denen in den schematischen Figuren, die eine Frontansicht darstellen, nur jeweils zwei zu erkennen sind, angeordnet sind. Die Kolben der Hydraulikzylinder beaufschlagen und halten eine obere Formträgerplatte, die vorliegenden in Form einer Sandwich-Konstruktion mit zwei Teilplatten 14 und 16 ausgeführt ist. Dabei ist die obere Teilplatte 14 der oberen Formträgerplatte an den hydraulischen Antriebselementen 28 bzw. deren Hydraulikzylinder befestigt und wird von diesen beaufschlagt. Mittels den Hydraulikzylindern 28 kann die obere Formträgerplatte 14/16 vertikal nach unten und oben verfahren werden. Zur Führung der oberen Formträgerplatte 14/16 sind Führungselemente oder Führungsschienen vorgesehen, die vorliegend jedoch nicht dargestellt sind.

Gegenüberliegend der oberen Formträgerplatte 14/16 ist bodenseitig in Figur 1 eine untere Formträgerplatte 24 als Fahrwagen angeordnet. Diese Formträgerplatte 24 ist mittels Laufrollen auf zwei Führungsschienen 26 verfahrbar gelagert, so dass sie aus dem Bereich der Abstützeinrichtung 12 heraus- bzw. in diesen Bereich hineinverfahrbar ist.

Die untere Formträgerplatte 24 weist an ihren Eckbereichen jeweils 4 Verriegelungselemente 22 auf, die mit Zugelementen 20 verriegelt werden können. Diese Zugelemente 20 führen vorliegend von den jeweiligen Verriegelungselementen 22 einer in Schließstellung angeordneten unteren Formträgerplatte 24 vertikal nach oben und zwar bis zu einem Querhaupt, welches auf dem Traggestell 12 angeordnet ist. Alternativ kann auch eine andere Konstruktion vorgesehen werden, bei der nicht das Querhaupt in den Kraftfluss - wie später noch erläutert wird - über die Zugstange eingebunden wird, sondern bei der die Zugelemente die obere und die untere Formträgerplatte mittelbar oder unmittelbar miteinander verbinden.

Mit den Verriegelungselementen 22 lässt sich eine lösbare kraftschlüssige Verbindung zwischen den vier Zugstangen 20 und der unteren Formträgerplatte 24 ausbilden.

Die Kopplung der Zugelemente 20 mittels dem Querhaupt dient auch dazu, dass die Kraft nicht über die Rollen des Fhrwagens in den Boden eingeleitet wird, wodurch die Rollen, die Rollenlagerung und der Fahrwagen unnötig belastet werden würden.

Vorliegend nicht dargestellt sind an den Formträgerplatten 14/16 und 24 in der Regel noch Werkzeugformen bzw. Werkzeugformhälften aufgenommen, die beim Zusammenfahren der beiden Formträgerplatten eine Formkavität ergeben. Alternativ können auch die Formträgerplatten integral als Werkzeug ausgebildet sein.

Wesentlich bei der vorliegenden Ausführungsform ist ein Gelenk 18, welches seitlich der Platten 14 und 16 zum schwenkbaren Verbinden derselben angeordnet ist und diese miteinander verschwenkbar verbindet. Damit lässt sich der untere Teil 16 der oberen Formträgerplatte gegenüber dem oberen Teil 14 der oberen Formträgerplatte um die Achse des Gelenks verschwenken.

Nachfolgend wird die Betriebsweise die in den Figuren dargestellte Ausführungsform näher erläutert:

In Figur 1 befindet sich der erfindungsgemäße Formträger 10 in einer ersten Arbeitsposition, die vorliegend den Ausgangszustand darstellen soll, bei dem die obere Formträgerplatte 14 in einer oberen Position angeordnet ist. Dabei können durch entsprechende (nicht dargestellte) Verriegelungsvorrichtungen die beiden Plattenteile 14 und 16 der oberen Formträgerplatte miteinander verriegelt sein.

Die beiden in den Formträgerplatten aufgenommenen oder darin ausgebildeten (nicht dargestellten) Formwerkzeuge sind gereinigt und zu einem Produktionsschritt bereit. Im nächsten Schritt wird - wie mit dem Doppelpfeil in Figur 1 bzw. Figur 2 angezeigt ist - die obere Platte 14/16 durch Beaufschlagen der Hydraulikkolben 28 vertikal nach unten in Richtung der unter Formträgerplatte 24 verfahren und zwar so weit, bis die darin vorgesehene Werkzeugform vollständig geschlossen ist.

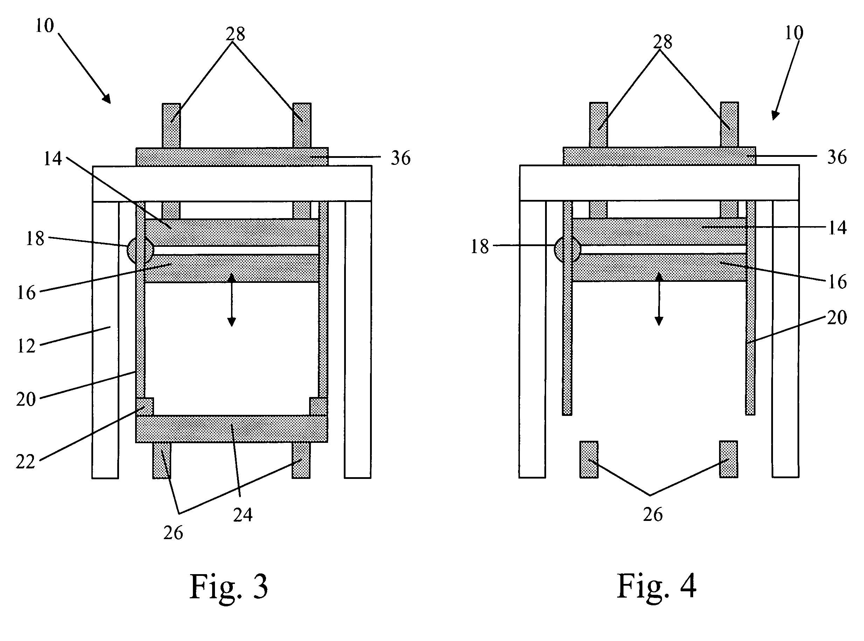

Nun kann ein Kunststoffmaterial, beispielsweise ein mit Langfasem gefülltes Polyurethanmaterial in die Kavität eingefüllt werden. Nach dem zumindest teilweisen Aushärten wird der Formträger 10 wieder in die in Figur 3 dargestellte Position geöffnet, und zwar durch Verfahren der oberen Formträgerplatte 14 und 16 nach oben mittels entsprechender Beaufschlagen der Hydraulikzylinder 28.

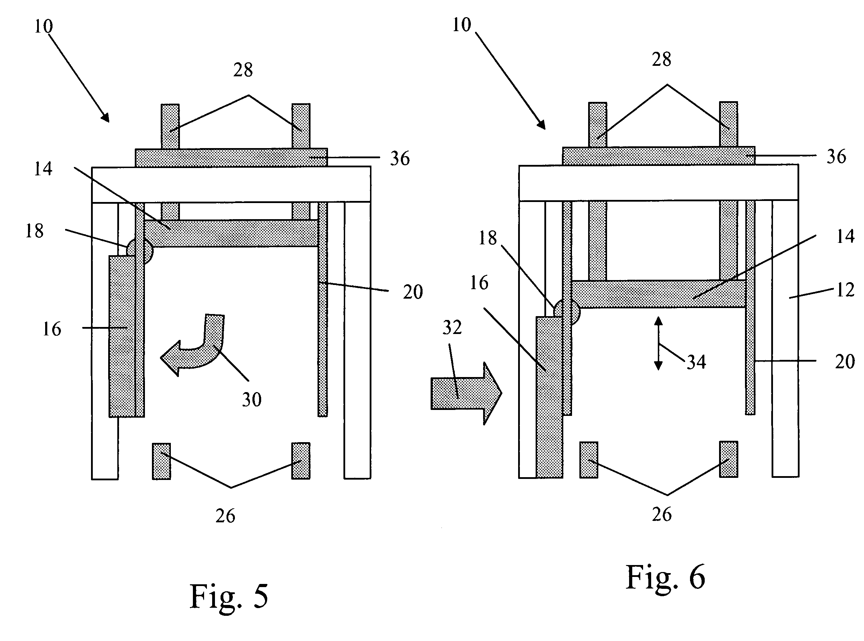

Dabei sind die beiden Positionen in Figur 1 und 3 im wesentlichen identisch zueinander. Während dieses Öffnungsvorgangs verbleibt das in der Kavität hergestellte Produkt auf der unteren Formträgerplatte 24 zurück und zwar in dem Teil der darauf angeordneten oder integrierten Werkzeugform. Nunmehr wird die untere Formträgerplatte 24 zum Entnehmen des Produktes entlang der Führungsschienen 26 aus dem Formträger herausverfahren, was in den Figuren 5 und 6 dadurch kenntlich gemacht ist, dass die untere Formträgerplatte 24 nicht mehr dargestellt ist.

Nunmehr lässt sich der Plattenteil 16 der oberen Formträgerplatte um die Achse des Gelenks 18 nach außen verschwenken. In Figur 5 ist dies mit dem Pfeil 30 gekennzeichnet, und die Verschwenkung um einen Winkel von 90° dargestellt In dieser Position kann die obere Formträgerplatte 14/16 - falls dies aufgrund der Dimensionen notwendig ist - noch vertikal abgesenkt werden (Pfeil 34), so dass der nunmehr vertikal ausgerichtete Teil 16 der oberen Formträgerplatte auf dem Boden aufsteht. Diese Bewegung ist im Übergang von Fig. 5 zu Fig. 6 deutlich gemacht. In dieser Postition kann ein Werkzeugbediener, angedeutet über den Pfeil 32, diesen Teil der oberen Formträgerplatte zusammen mit dem darauf befestigten Werkzeug leicht und ergonomisch optimal erreichen. Auch Versperren keine Verriegelungslaschen oder sonstige konstruktive Elemente den freien Zugang zum Werkzeug. Damit ist eine optimale Reinigungsmöglichkeit bzw. Inspektion dieses Werkzeugteils gegeben, ohne dass irgendwelche Podeste oder Gruben erforderlich wären.

Nach den Inspektions-, Wartungs- oder Reinigungsarbeiten kann der Plattenteil 16 der oberen Formträgerplatte wieder etwas angehoben, um 90° zurückverschwenkt und mit dem anderen Plattenteil 14 der oberen Formträgerplatte gekoppelt oder verriegelt werden.

Damit befindet man sich wieder in einer Position, wie sie in Figur 1 angegeben ist und ein neuer Produktionszyklus kann bei in einer in Schließstellung gebrachten unteren Formträgerplatte 24 wieder gestartet werden.

Natürlich sind auch andere Ausführungsformen ohne weiteres möglich, so ist es möglich, einen Verschwenkantrieb über einen Hydraulikkolben zu realisieren, dessen Zylinder beispielsweise an dem Plattenteil 14 der oberen Formträgerplatte und dessen Hydraulikkolben an dem Plattenteil 16 der oberen Formträgerplatte angeordnet ist.

Gemäß einer vorteilhaften Ausführungsform kann es vorgesehen sein, die in Figur 1 dargestellte verriegelte Kombination aus Zugstange und unterer Formträgerplatte etwas nach oben anzuheben, so dass die Kraft vom Boden von den Schienen oder von etwaigen auf den Schienen abrollenden Laufrollen oder einem Fahrwagen ferngehalten wird.

## Patentansprüche

1. Formträger für eine Werkzeugform umfassend
- eine obere Formträgerplatte (14, 16, 18),
- eine untere Formträgerplatte (24),
- eine Abstützeinrichtung (12) an der die obere Formträgerplatte (14, 16, 18) fest gehalten ist,
- eine Antriebseinrichtung (28) für die obere Formträgerplatte, die zwischen der Abstützeinrichtung und der oberen Formträgerplatte derart wirkt, dass die obere und untere Formträgerplatte relativ zueinander bewegbar ausgebildet sind und eine Schließkraft aufbringbar ist,
- zusätzlich zur Abstützeinrichtung (12) Zugelemente (20), die eine auf Zug ausgelegte Halterung zwischen der Abstützeinrichtung (12) oder der oberen Formträgerplatte (14, 16) einerseits und der unteren Formträgerplatte (24) andererseits bilden, um den Aufbau einer Schließkraft zu ermöglichen,
wobei die obere Formträgerplatte (14, 16, 18) zwischen einer Arbeitsposition, in der sie zum Schließen des Formträgers auf die untere Formträgerplatte (24) zu verfahrbar ist, und einer zweiten Position, in der sie für einen Bediener zugänglich ist, verschwenkbar ausgebildet ist,
**dadurch gekennzeichnet,**
**dass** Kopplungselemente (22) an den Zugelementen (20) oder an der unteren Formträgerplatte (24) für eine lösbar ausgebildete Kopplung von jeweiligem Zugelement (20) und unterer Formträgerplatte (24) vorgesehen sind..

2. Formträger nach Anspruch 1,
**dadurch gekennzeichnet,**
**dass** die untere Formträgerplatte (24) aus dem Bereich der Abstützeinrichtung (12) herausverfahrbar sowie in diesen Bereich hineinverfahrbar ist.

3. Formträger nach Anspruch 2,
**dadurch gekennzeichnet,**
**dass** Führungsschienen (26) zum Verfahren der unteren Formträgerplatte (24) vorgesehen sind.

4. Formträger nach einem der vorhergehenden Ansprüche,
**dadurch gekennzeichnet,**
**dass** die Kombination aus Zugstange und unterer Formträgerplatte nach oben anhebbar ist, so dass beim Aufbringen der Schließkraft keine Kraft auf den Boden oder etwaige Schienen einwirkt.

5. Formträger nach einem der vorhergehenden Ansprüche,
**dadurch gekennzeichnet,**
**dass** die obere Formträgerplatte (14, 16, 18) zweiteilig ausgebildet ist, wobei ein oberer Teil (14) an der Abstützeinrichtung (12) abgestützt ist und der untere Teil (24) gegenüber dem oberen Teil (14) verschwenkbar ausgebildet ist.

6. Formträger nach Anspruch 5,
**dadurch gekennzeichnet,**
**dass** die Verschwenkung über ein Gelenk (18) realisiert ist.

7. Formträger nach einem der vorhergehenden Ansprüchen,
**dadurch gekennzeichnet,**
**dass** ein Schwenkantrieb für die Verschwenkung vorgesehen ist.

8. Formträger nach einem der vorhergehenden Ansprüchen,
**dadurch gekennzeichnet,**
**dass** sich die Antriebseinrichtung (28) einerseits mittelbar oder unmittelbar an der Abstützeinrichtung (12) und andererseits an der oberen Formträgerplatte (14, 16, 18), insbesondere deren oberen Teil (14) abstützt.

9. Formträger nach einem der vorhergehenden Ansprüche,
**dadurch gekennzeichnet,**
**dass** einem im wesentlichen 90 ° Verschwenkung realisiert ist.

## Claims

1. A mould carrier for a tool mould, comprising
- an upper mould carrier plate (14, 16, 18),
- a lower mould carrier plate (24),
- a support arrangement (12) on which the upper mould carrier plate (14, 16, 18) is securely held,
- a drive arrangement (28) for the upper mould carrier plate, which acts between the support arrangement and the upper mould carrier plate such that the upper and lower mould carrier plates are constructed so as to be movable relative to each other and a closing force is able to be applied,
- in addition to the support arrangement (12), tension elements (20), which form a mount, designed for tension, between the support arrangement (12) or the upper mould carrier plate (14, 16) on the one hand and the lower mould carrier plate (24) on the other hand, in order to make possible the build-up of a closing force,
wherein the upper mould carrier plate (14, 16, 18) is constructed so as to be pivotable between a working position, in which it is movable towards the lower mould carrier plate (24) for closing the mould carrier, and a second position, in which it is accessible for an operator,
**characterized in that**
coupling elements (22) are provided on the tension elements (20) or on the lower mould carrier plate (24) for a detachably formed coupling of the respective tension element (20) and lower mould carrier plate (24).

2. The mould carrier according to Claim 1,
**characterized in that**
the lower mould carrier plate (24) is able to be moved out from the region of the support arrangement (12) and is able to be moved into this region.

3. The mould carrier according to Claim 2,
**characterized in that**
guide rails (26) are provided for moving the lower mould carrier plate (24).

4. The mould carrier according to one of the preceding claims,
**characterized in that**
the combination of tension rod and lower mould carrier plate is able to be lifted upwards, so that on the application of the closing force, no force acts on the ground or on any rails.

5. The mould carrier according to one of the preceding claims,
**characterized in that**
the upper mould carrier plate (14, 16, 18) is constructed in two parts, wherein an upper part (14) is supported on the support arrangement (12) and the lower part (24) is constructed so as to be pivotable with respect to the upper part (14).

6. The mould carrier according to Claim 5,
**characterized in that**
the pivoting is realized by means of a joint (18).

7. The mould carrier according to one of the preceding claims,
**characterized in that**
a pivot drive is provided for the pivoting.

8. The mould carrier according to one of the preceding claims,
**characterized in that**
the drive arrangement (28) rests on the one hand indirectly or directly on the support arrangement (12) and on the other hand on the upper mould carrier plate (14, 16, 18), in particular its upper part (14).

9. The mould carrier according to one of the preceding claims,
**characterized in that**
a substantially 90° pivoting is realized.

## Revendications

1. Support de moule pour moule d'outillage comprenant
- un plateau de support de moule supérieur (14, 16, 18),
- un plateau de support de moule inférieur (24),
- un dispositif d'appui (12) sur lequel le plateau de support de moule supérieur (14, 16, 18) est maintenu fixement,
- un dispositif d'entraînement (28) pour le plateau de support de moule supérieur qui agit entre le dispositif d'appui et le plateau de support de moule supérieur de telle manière que les plateaux supérieur et inférieur de support de moule peuvent être mobiles l'un par rapport à l'autre et qu'une force de fermeture peut être exercée,
- en plus du dispositif d'appui (12), des éléments de traction (20) qui forment une fixation établie par traction entre le dispositif d'appui (12) ou le plateau de support de moule supérieur (14, 16) d'une part et le plateau de support de moule inférieur (24) d'autre part, afin de permettre la formation d'une force de fermeture,
sachant que le plateau de support de moule supérieur (14, 16, 18) peut pivoter entre une position de travail dans laquelle il doit être mobile sur le plateau de support de moule inférieur (24) pour fermer le support de moule, et une deuxième position de travail dans laquelle il est accessible à un utilisateur,
**caractérisé en ce que** des éléments d'accouplement (22) sont prévus sur les éléments de traction (20) ou sur le plateau de support de moule inférieur (24) pour un accouplement séparable de l'élément de traction (20) respectif et du plateau de support de moule inférieur (24).

2. Support de moule selon la revendication 1, **caractérisé en ce que** le plateau de support de moule inférieur (24) peut être sorti de la zone du dispositif d'appui (12) ainsi que rentré dans cette zone.

3. Support de moule selon la revendication 2, **caractérisé en ce que** des rails de guidage (26) sont prévus pour déplacer le plateau de support de moule inférieur (24).

4. Support de moule selon l'une des revendications précédentes, **caractérisé en ce que** la combinaison de barre de traction et de plateau de support de moule inférieur peut être soulevée vers le haut de façon que lorsque l'on applique la force de fermeture, aucune force ne soit appliquée sur le sol ou des rails quelconques.

5. Support de moule selon l'une des revendications précédentes, **caractérisé en ce que** le plateau de support de moule supérieur (14, 16, 18) est formé de deux parties, sachant qu'une partie supérieure (14) est appuyée sur le dispositif d'appui (12) et que la partie inférieure (24) peut pivoter par rapport à la partie supérieure (14).

6. Support de moule selon la revendication 5, **caractérisé en ce que** le pivotement est effectué via une articulation (18).

7. Support de moule selon l'une des revendications précédentes, **caractérisé en ce qu'**un actionneur rotatif est prévu pour le pivotement.

8. Support de moule selon l'une des revendications précédentes, **caractérisé en ce que** le dispositif d'entraînement (28) s'appuie directement ou indirectement sur le dispositif d'appui (12) d'une part et s'appuie sur le plateau de support de moule supérieur (14, 16, 18) en particulier sa partie supérieure (14) d'autre part.

9. Support de moule selon l'une des revendications précédentes, **caractérisé en ce qu'**un pivotement d'essentiellement 90° est effectué.
